# EUROPEAN PATENT APPLICATION

(11) **EP 1 093 968 A2**
(43) Date of publication of application: **25.04.2001**
(21) Application number: 00110535.2
(22) Date of filing: 17.05.2000
(51) Int. Cl.: B60Q 3/02, B60Q 3/04

(54) **A motor vehicle provided with a dashboard illumination unit**

(30) Priority: 19.10.1999 IT TO990909
(71) Applicant: FIAT AUTO S.p.A., 10135 Torino (IT)
(72) Inventor: Bianco, Guido, 10045 Piossasco (IT); Jansen, Peter, 10045 Piossasco (IT)
(74) Representative: Eccetto, Mauro

(57) **Abstract**

A motor vehicle (1) is provided with a dashboard (5) carrying indicating and control instrumentation (12), and a dashboard illumination unit (25) having a light source (26, 30) disposed outside the dashboard (5) in a position facing the dashboard (5) itself and operable to emit a beam of light (27, 33) directly incident on the dashboard (5) to illuminate at least the instrumentation (12).

## Description

The present invention relates to a motor vehicle provided with a dashboard illumination unit for the general illumination of the instrumentation carried by the dashboard.

As is known, a motor vehicle has within its passenger compartment a dashboard carrying instrumentation for information and control, in particular including a control panel provided with measurement indicators, warning lamps, knobs, switches and levers for control of respective functions of the motor vehicle such as, for example, the passenger compartment air conditioning, the heated rear window, and the fog lamps.

To illuminate the instrumentation in the case of low external illumination there is provided an illumination unit housed in the dashboard and generally comprising a plurality of incandescent lamps disposed behind the panel, the switches and the knobs.

Known illumination units as just described, although widely utilised, are not very satisfactory in that they are rather complex and expensive.

In fact, each lamp necessitates associated wiring and an associated lamp holder so that the costs both of production of the motor vehicle and assembly of the instrumentation onto the dashboard are relatively high.

The complexity of the illumination unit is increased by the fact that each switch must be associated with a further lamp capable of indicating activation of the associated function.

Moreover, the illumination unit emits heat in dependence on the power and number of lamps and, in general, it is difficult to find an acceptable compromise to obtain sufficiently uniform illumination with a limited quantity of heat being developed. Moreover, the light emitted from within the instrumentation can annoy the eyes of the driver, in particular if the journey is protracted for a relatively long time period. To overcome this disadvantage illumination units are normally provided with devices for adjusting the luminous intensity of the lamps, which further increases the cost and complexity.

In the case of failure of even only one of the lamps the illumination generally becomes non-uniform, with the result that it becomes somewhat difficult for the driver to identify with precision and immediacy the mechanical indicators or the position of the switches and the knobs. Further, the simple replacement of the damaged lamp involves relatively long times and costs in that it is generally necessary to dismount part of the instrumentation from the dashboard.

The object of the present invention is that of providing a motor vehicle having a dashboard illumination unit which makes it possible to overcome the above-explained problems in a simple and economic manner.

According to the present invention there is provided a motor vehicle having a dashboard, a plurality of indicator and control instruments carried by the said dashboard, and illumination means operable to illuminate the said dashboard; characterised in that the said illumination means comprise at least one light source disposed outside the said dashboard in a position facing the dashboard and operable to emit an associated light beam incident directly on the said dashboard to illuminate at least the said indicating and control instruments.

The invention will now be described with reference to the attached drawings which illustrate a non-limitative embodiment thereof, in which:
Figure 1 is a schematic side view with parts removed for clarity of a preferred embodiment of the motor vehicle provided with a dashboard illumination unit according to the present invention;
Figure 2 is a perspective view from above with parts removed for clarity, of the motor vehicle of Figure 1;
Figure 3 illustrates the dashboard of the motor vehicle of Figure 2; and
Figure 4 is a perspective view of a detail of Figure 3.

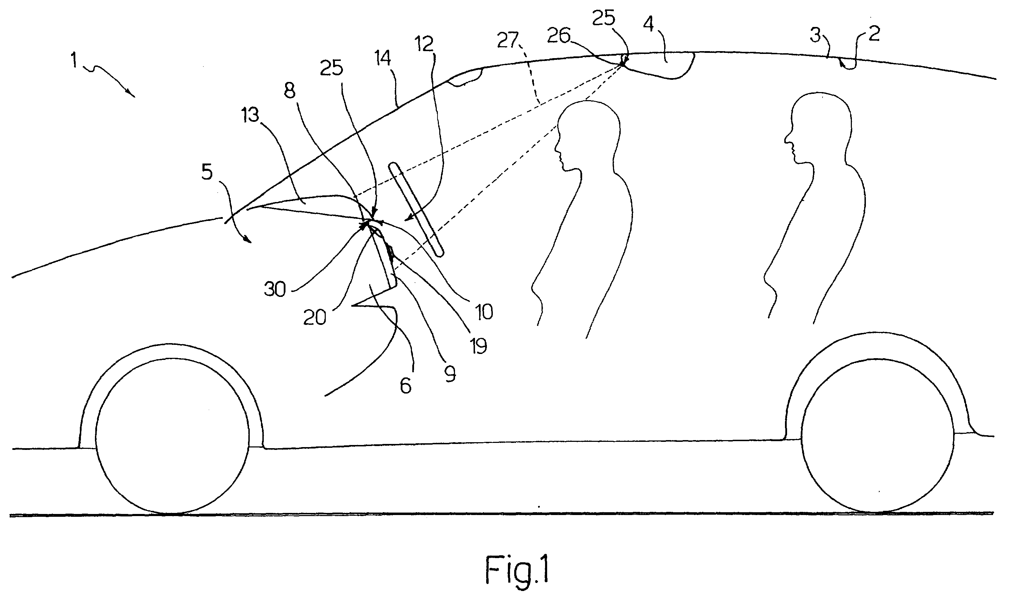

In Figure 1 the reference numeral 1 generally indicates a motor vehicle comprising a passenger compartment 2 deliminated above by a roof panel 3 which carries a roof light fitting 4 for internal illumination of the passenger compartment 2 disposed in an intermediate longitudinal position, in particular behind the front seats of the passenger compartment 2 and in an intermediate transverse position between the front seats themselves.

As illustrated in Figures 1, 2 and 3, the passenger compartment 2 is delimited at the front by a dashboard 5 having an intermediate portion 6 which, in turn, comprises a substantially horizontal wall 8 and a frontal lower panel 9 delimiting between them a substantially horizontal cavity 10.

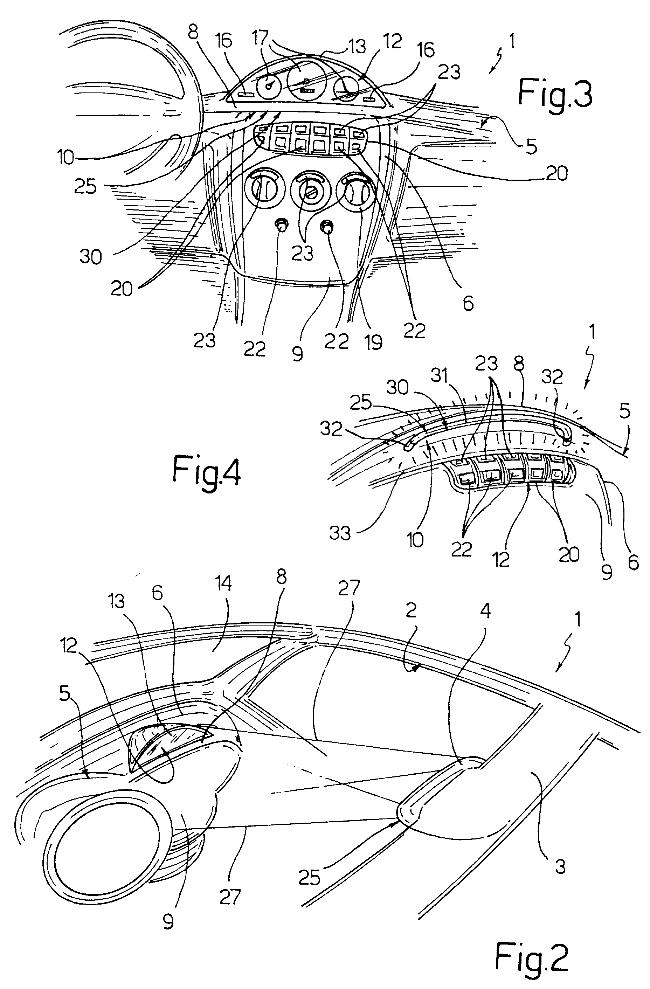

The intermediate portion 6 carries indicating and control instrumentation 12 which includes, in the particular embodiment described, an indicating panel 13 (Figures 2 and 3) supported by the wall 8 opposite the panel 9 in a position facing a windscreen 14 of the motor vehicle 1 and provided with warning lamps 16 and measurement indicators 17 having pointer needles (Figure 3).

With reference to Figures 3 and 4, the instrumentation 12 further includes a plurality of knobs 19 and control switches 20 carried by the panel 9 and operable to control various functions of the motor vehicle 1, such as, for example, the air conditioning for the passenger compartment 2, the front and rear fog lamps, the heated rear window, and the electric window winders. In particular, the switches 20 are disposed in a substantially horizontal row in a position facing the wall 8, whilst the knobs 19 are disposed in a position in front of the switches 20. Both the switches 20 and the knobs 19 have associated respective indicator lamps 22 provided with internal lamps operable to indicate activation of the associated functions, and respective zones 23 provided with icons representing the functions themselves and covered by fluorescent varnish.

As illustrated in Figures 1 and 2, the instrumentation 12 may, in use, be illuminated by an illumination unit 25 which forms a constituent part of the motor vehicle 1 and comprising 2 light emitting diodes 26 housed in the roof light fitting 4 in respective positions transversely spaced from one another and facing the dashboard 5, to emit, in use, respective beams 27 of light directly incident on the dashboard 5 and, in particular, on the instrumentation 12. The unit 25 further includes an illumination device 30 carried by the wall 8 and, in turn, including a fibre optic cable 31 extending into the cavity 10 in a position facing and substantially parallel to the row of switches 20, and two light-emitting diodes 32 coupled to respective opposite ends of the cable 31.

In use, the illumination unit 25 is energised upon activation of the headlamps of the motor vehicle 1 in the case of low external illumination. The two light-emitting diodes 26 project towards the portion 6 respective light beams 27 which intersect one another and illuminate both the panel 13 and the panel 9. The cable 31, on the other hand, guides the light emitted by the light-emitting diodes 32 and emits an associated diffuse beam of light 33 downwards thanks to the screening of the wall 8, directly illuminating the row of switches 20.

From the above explanation it is evident that the illumination unit 25 for illuminating the dashboard 5 of the motor vehicle 1 is extremely simple and economical.

In fact, the particular arrangement of the light-emitting diodes 26 and the device 30 makes it possible to illuminate the instrumentation 12 from the outside and, therefore, to utilise, with respect to known arrangements, an extremely small number of light sources and, therefore, of lamp holders and electrical supply wiring, thereby limiting both the associated costs of the unit 25 and the assembly costs of the dashboard 5.

The unit 25 is, in any case, efficient and makes it possible to have a uniform general illumination of the instrumentation 12 so that it is very simple and immediate to identify the indicators 17 and to operate the switches 20 and the knobs 19 correctly. The driver's eyes only perceive reflected and uniform light so that they tend to become less tired than with known arrangements, without, however, the unit 25 having devices for adjusting the light intensity.

The presence of two light-emitting diodes 26 makes it possible to have a sufficient and uniform illumination even in the case of failure of one of the light-emitting diodes 26, and the intersecting light beams 27 correctly illuminate the instrumentation 12 even if one of the two beams 27 is intercepted by movements of the driver or the passengers.

The particular arrangement of the light-emitting diodes 26 coupled to the roof light fitting 4 and of the device 30 coupled to the wall 8, then, makes it possible to replace the light-emitting diodes 26 and 32 in a rapid and simple manner without dismantling the instrumentation 12 from the dashboard 5 and, therefore, with restricted costs with respect to known arrangements.

With respect to incandescent lamps the light-emitting diode 26 and 32 have a lower energy consumption and greater duration, do not tend to overheat the wiring and the instrumentation 12, and make it possible to have differently coloured illumination depending on the colour of the light-emitting diode utilised, with consequent raised aesthetic value.

From the above explanation it is, finally, evident that the motor vehicle 1 provided with the dashboard illumination unit 25 described can have modifications and variations introduced thereto which do not depart from the protective field of the present invention.

In particular, the instrumentation 12 could be different from that described and illustrated by way of example; the, switches 20, the knobs 19 and the control panel 13 could be disposed in a different position from that shown, and the unit 25 could illuminate only part of the instrumentation 12 or portions of the dashboard 5 not provided with instruments. Moreover, the unit 25 could comprise a different number of light-emitting diodes 26, 32 from that indicated, for example only one light-emitting diode 26 or 32, and/or could be disposed in different positions from those indicated by way of example.

## Claims

1. A motor vehicle (1) having a dashboard (5), a plurality of indicating and control instruments (12) carried by the said dashboard (5), and illumination means (25) operable to illuminate the said dashboard (5); characterised in that the said illumination means (25) comprise at least one light source (26, 30) disposed outside the said dashboard (5) in a position facing the dashboard (5) itself and operable to emit an associated light beam (27, 33) incident directly on the said dashboard (5) to illuminate at least the said indicating and control instruments (12).

2. A motor vehicle according to Claim 1, characterised in that the said illumination means (25) comprise two light sources (26) operable to emit respective light beams (27) which intersect one another.

3. A motor vehicle according to Claim 1 or Claim 2, characterised in that each said light source (26, 30) comprises a light-emitting diode (26, 32).

4. A motor vehicle according to any preceding Claim, characterised in that the said at least one light source (30) comprises a light-emitting diode (32) and a fibre optic element (31) operable to guide and diffuse the light emitted by the said light-emitting diode (32).

5. A motor vehicle according to Claim 4, characterised in that the said indicating and control instruments (12) include a plurality of control switches (20), the said optical fibre element (31) being disposed in a position facing the said control switches 20.

6. A motor vehicle according to any preceding Claim, characterised in that at least part (19, 20) of the said indicating and control instruments (12) comprise respective zones (23) covered in fluorescent varnish.

7. A motor vehicle according to any preceding Claim, characterised in that it has a passenger compartment (2) delimited by a roof (3); the said light source (26) being carried by the said roof (3).

8. A motor vehicle according to any preceding Claim, characterised in that the said light source (30) is supported by the said dashboard (5).
